Europäisches Patentamt

European Patent Office

Office européen des brevets

(11) Publication number: **0 405 924 A2**

# EUROPEAN PATENT APPLICATION

(21) Application number: **90306994.6**

(51) Int. Cl.5: **G06F 3/05, G06F 15/74**

(22) Date of filing: **26.06.90**

(30) Priority: **27.06.89 US 371901**

(43) Date of publication of application:
**02.01.91 Bulletin 91/01**

(84) Designated Contracting States:
**CH DE FR GB IT LI NL SE**

(71) Applicant: **HONEYWELL INC.**
**Honeywell Plaza**
**Minneapolis Minnesota 55408(US)**

(72) Inventor: **Pak, Sang**
**7409 Painted Pony Trail NW**
**Albuquerque, NM 87120(US)**
Inventor: **Ullestad, David C.**
**10416 LaGrange Park Drive. NE**
**Albuquerque, NM 87123(US)**
Inventor: **Schneider, Eric D.**
**2301 Newton Avenue South**
**Minneapolis, NM 55405(US)**

(74) Representative: Fox-Male, Nicholas Vincent
**Humbert**
**Honeywell Control Systems Limited Charles**
**Square**
**Bracknell Berkshire RG12 1EB(GB)**

(54) **Analog to digital input operating system.**

(57) An analog to digital input operating system (ADIOS) provides a flexible input data sampling schedule that is synchronized with a process controller requiring the data at a known rate for future utilization. An ADIOS Executive program cooperates with the controller hardware to provide an adaptive scheduling of any input reading based on the controller configuration which is established by the end-user via a controller interface, such as a personal computer (PC), and download to the controller when the configuration is completed.

Fig. 1

## BACKGROUND OF THE INVENTION

### Field of the Invention

The present invention relates to process controllers. More specifically, the present invention is directed to an input data sampling system for a process controller.

## SUMMARY OF THE INVENTION

An object of the present invention is to provide an improved input data sampling scheduling system.

In accomplishing this and other objects, there has been provided, in accordance with the present invention, an input data sampling scheduling system having a program for adaptively controlling an input data sampling scheduling based on the hardware configuration of a process controller requiring the data.

## BRIEF DESCRIPTION OF THE DRAWINGS

A better understanding of the present invention may be had when the following description is read in connection with the accompanying drawings, in which:

Fig. 1 is a block diagram illustrating the operation of an input data adaptive sampling system embodying an example of the present invention,

Fig. 2 is an example of an analog input channel schedule (AIS) table,

Fig. 3 is an example of a real-time conversion of the AIS table shown in Fig. 2 illustrating one FAST sub-cycle,

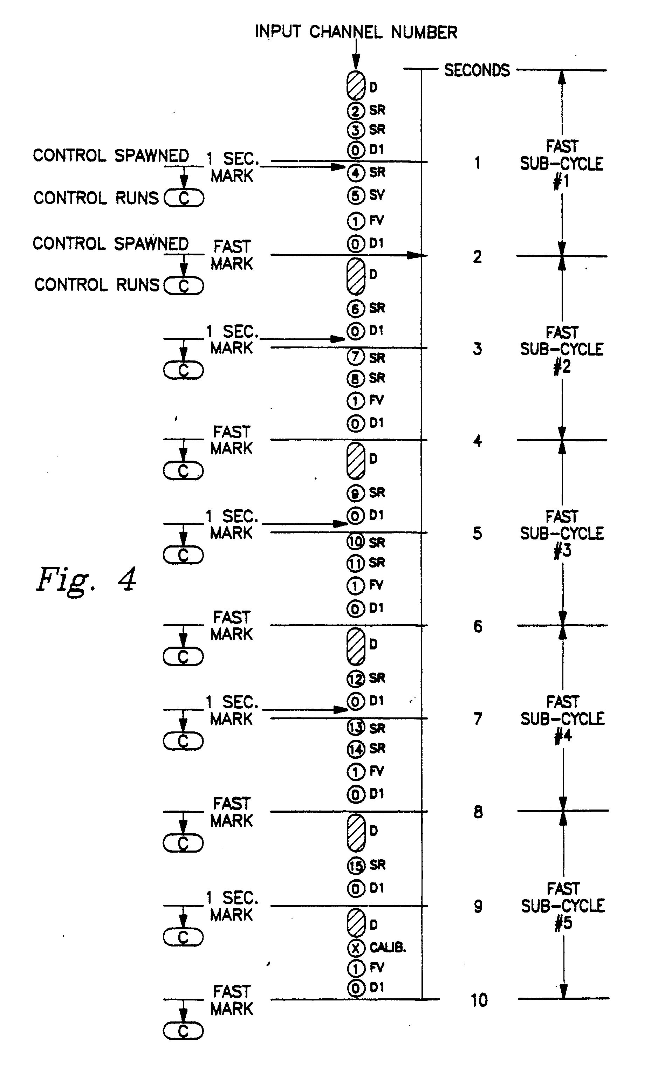

Fig. 4 is an example of a real-time conversion of the AIS table shown in Fig. 2 illustrating the entire SLOW cycle consisting of multiple sub-cycles,

Figs. 5A, 5B and 5C illustrate the effect of input variations to determine a new valid reading,

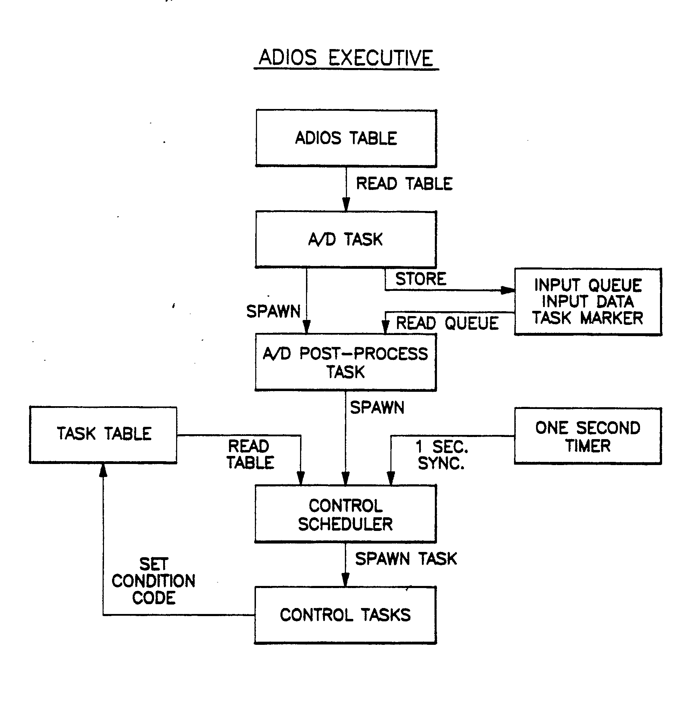

Fig. 6A is a flow chart of the ADIOS Executive control routine for controlling the conversions shown in Figs. 3 and 4,

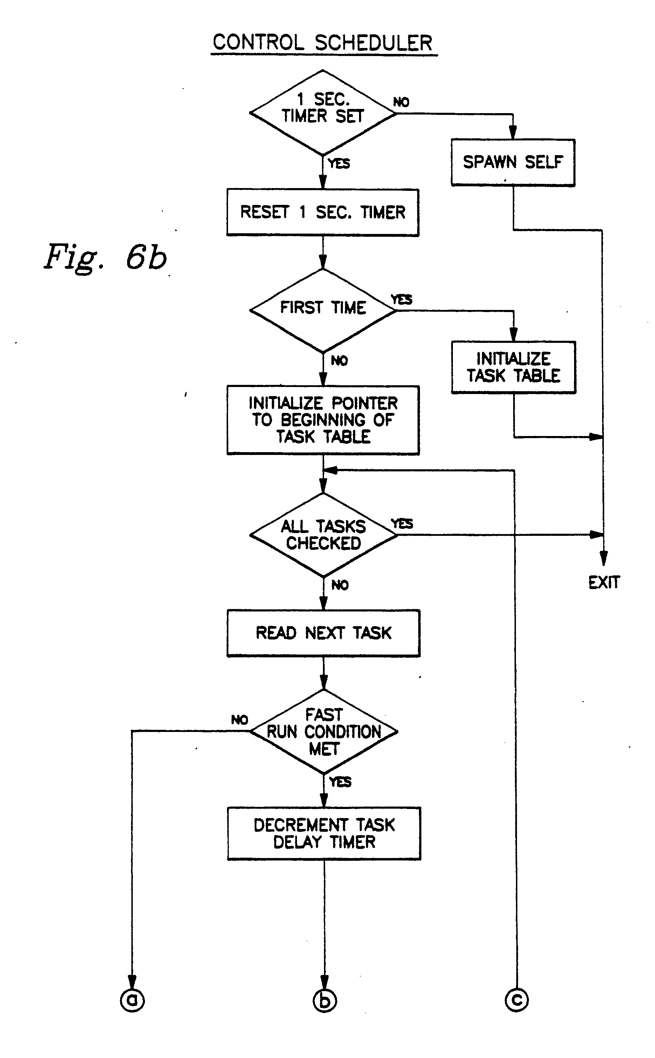

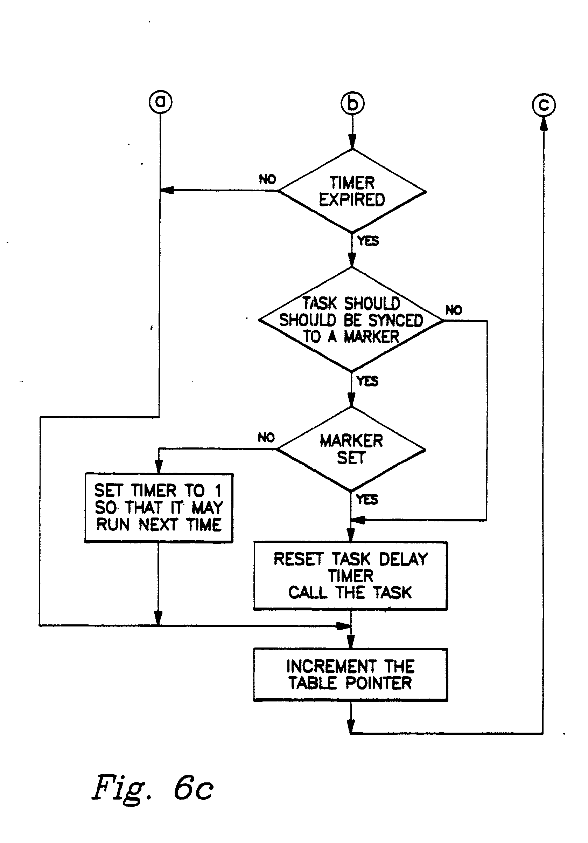

Figs. 6B and C are a flow chart of the Control Scheduler routine used in Fig. 6A,

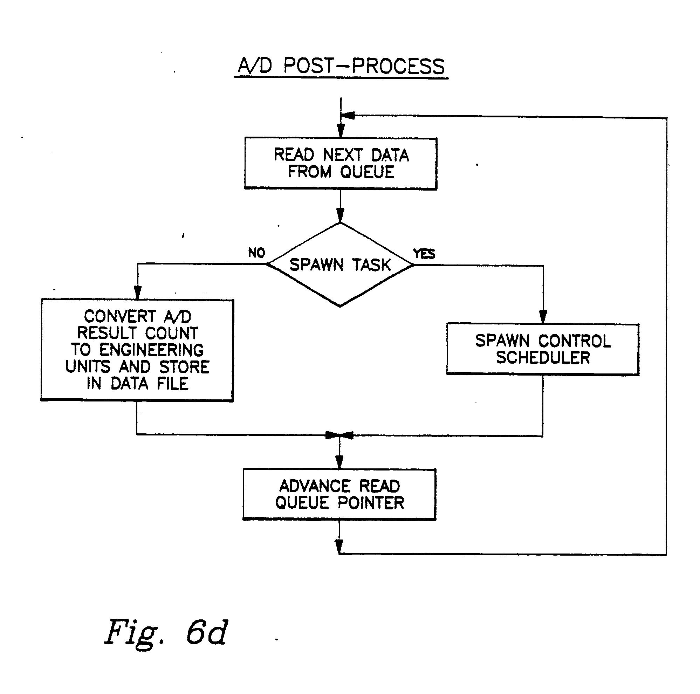

Fig. 6D is a flow chart of the A/D Post Process routine used in Fig. 6A and

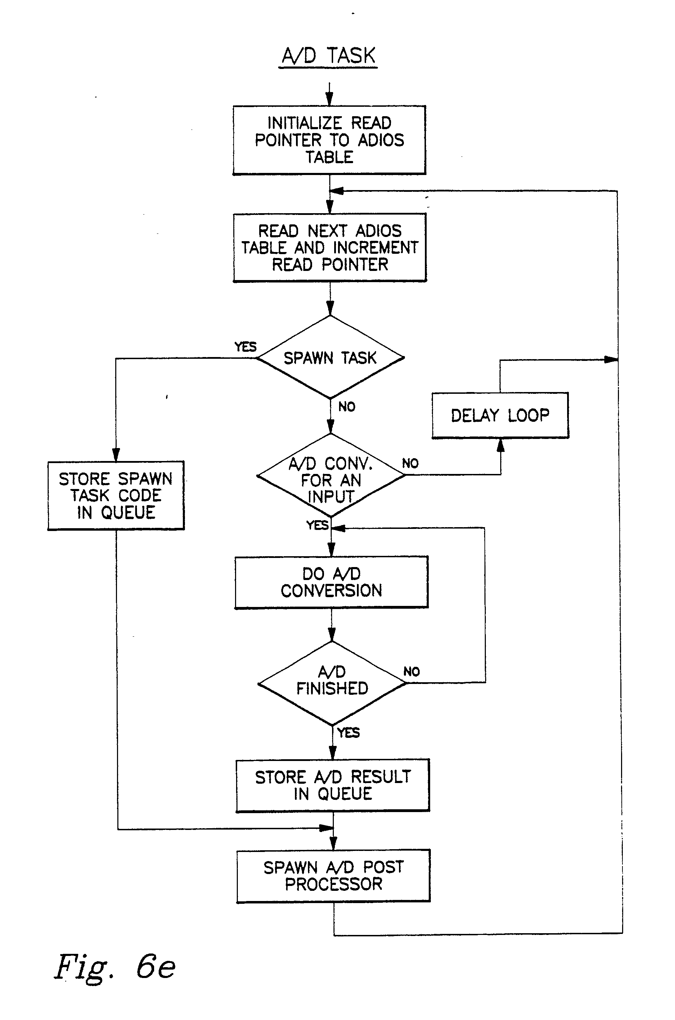

Fig. 6E is a flow chart of the A/D Task routine used in Fig. 6A.

## DESCRIPTION OF THE PREFERRED EMBODIMENT

Prior art in the area of utilizing analog input data in a process control environment has usually involved the following:

1. Analog inputs are read, e.g., a physical voltage, resistance, or current signal is converted to a value meaningful to the control program that uses the value, in a manner and a rate fixed by the hardware/software system that is controlling the readings.

2. The control algorithm uses the values either at a rate that is synchronized with the scheme for reading the inputs, e.g., the operating system reads all the channels every "x" seconds, then calls the control routines every "x" seconds, or the rate at which it uses the input values is not critical.

3. The physical inputs used in the control system are based on a fixed or programmable configuration, but each input's sample schedule is fixed in the overall sampling scheme of the hardware.

The present invention, on the other hand, has the following significant advantages over the prior art:

1. Allows the use of a generic hardware/software system.

2. Provides varying sample rates to accommodate any controller that uses the hardware.

3. Makes an otherwise inherently slow A/D converter system into a very efficient system

2

4. Provides a variety of sample schedules based on the configuration entered by the end-user, not the manufacturer of the hardware.

5. Provides control/reading synchronization regardless of the final schedule configured.

The design and implementation of the present invention system was based on the need to service (sample) all of the possible analog inputs within a period that will satisfy any potential application for which the controller is intended, while utilizing hardware which is inexpensive, but inherently slow in relation to other A/D technologies currently available. Since the needs of the presently used control algorithms require certain inputs to be read as frequently as once every 1-3 seconds, it is obvious that a simple system of just cycling through all data inputs, e.g., sixteen, was not feasible. The objective, therefore, was first, to provide a system that sampled certain inputs at rates as fast as once a second while scheduling the remaining channels at a rate that is still acceptable to the control routines. Second, to provide a synchronized schedule of channel readings, such that the control routines are called with respect to a known reading frequency (thus making "rate of change" calculations reliable). Third, to provide time slots within this schedule for interspersing calibration channel readings.

The analog to digital input operating system (ADIOS) of the present invention is composed of routines which reside in memory both in the personal computer (PC) interface and in the controller itself. The PC provides the user interface for configuring the inputs of the controller. From this configuration a "Channel Schedule" is constructed which describes when each of the physical channels on the controller should be sampled. The PC constructs the Channel Schedule based on entries in its database which are loaded as part of the control algorithm. The database for a given control algorithm consists of items such as: Label Data (for making the user interface "friendly"), Parameter Check Data (for doing error checking on user entries), and Description Data (which describes certain characteristics of the control algorithm and its parameters). The Description Data (related to the required sampling rates of the control algorithm's inputs) is used to build the Channel Schedule. The PC downloads this schedule into a programmable read-only memory (PROM) of the controller. During normal operation, the ADIOS samples channels and calls tasks based on this downloaded Channel Schedule and also based on a "Task Table" which resides in the control algorithm PROM. This TASK Table is built by the control algorithm developers and describes the control routines and their run frequency.

The present invention provides flexibility in the way the control algorithm is designed by allowing essentially three programmable sensor input data rates. These rates (call DIGI, FAST and SLOW) are programmable by the control algorithm developer (not the end-user) in increments of one second. The FAST channels can be specified in multiples of one second and the SLOW channels in multiples of the FAST channel rate. The DIGI rate is always a digital input samples at a one second rate, regardless of the programmed FAST rate. A "Digital" channel, in this case, is an analog input channel configured as a digital input. The reading of this channel is handled differently for this type and is described hereinafter.

Since the Channel Schedule is built in the PC during user programming, the validity of a given configuration will not be determined until the user has completed the configuration (for example, you may not be able to use "x" FAST channels and also be able to sample "Y" SLOW channels within the SLOW rate). This may be alleviated by the proper selection of the FAST/SLOW rates and the proper selection of the rate assigned to each Control Variable by the control algorithm designer.

One constraint that the control algorithm designer must also be aware of is that this Channel Schedule size will have to be fixed at a suitable size since it resides in the controller's PROM, and that a given configuration will have a table size which may exceed this limit. For example, a schedule where the FAST rate was 2 seconds and the SLOW rate was 10 seconds would require roughly 50 bytes of PROM. A schedule where the FAST rate was one second the SLOW rate was fifteen seconds would require over 250 bytes. The amount of PROM allocated for this table will be based on the memory which can be spared and the "normal" schedule size, e.g., 128 bytes.

Performance Examples (R = resistive, V = voltage, D = digital:

    1. FAST Rate = 2 seconds, SLOW Rate = 10 seconds:
        a) Up to 4 FAST V, 8 SLOW R, 4 SLOW V.
        b) Up to 2 FAST R, 1 FAST V, 5 SLOW R, 8 SLOW V.
        c) Up to 3 FAST R, 6 FAST D, 4 SLOW R and 1 SLOW V.
        d) Up to 3 FAST R, 6 FAST D, 3 SLOW R and 3 SLOW V.
        e) Up to 3 FAST V, 2 FAST R, 4 SLOW R., etc.
    2. FAST Rate = 3 seconds, SLOW Rate = 15 seconds (current VAV):

a) Up to 9 FAST V, 2 FAST D, and 5 SLOW R or V.

Channel Schedule size = 65 bytes.

b) 2 FAST V, 3 FAST R, 9 SLOW R, 2 FAST D.

Channel Schedule size = 51 bytes.

Any "R" can be replaced with 2 "V's".

The control algorithm must specify the FAST and SLOW rates, and the allowable tolerance for the one second Mark (described hereinafter) 0-255 msec. The control algorithm must designate each input variable as either DIGI, FAST or SLOW parameters. This designation is done at the time the control algorithm is developed. The scheduling of the reading of the analog input channels based on these designations is accomplished transparent to the user, done by the PC at configuration time.

Associated with each control algorithm variable is a parameter that describes the allowable deviation between successive readings of the A/D converter. This "delta" essentially limits the rate of change which is considered legitimate, as opposed to the change that would be attributable to a noise disturbance only. This delta is specified in engineering units. Therefore, the fact that the reading was in or out of this delta is not known until after the Calculation/Filter routine is actually run. This requires every reading to be entered into the AI Queue, meaning that there will be two entries into the AI Queue for every analog input reading (see hereinafter for details of how these two readings are used in a filtering scheme).

The memory resident ADIOS Executive program spawns a Task Scheduler (TS) at one second intervals, passing information to the TS pertaining to what kind of situation just occurred to cause the spawn. The Task Scheduler calls tasks that should be run every second, every two seconds, every ten seconds, etc., based on a Task Table built by the control algorithm developers. This table describes the algorithm routine name, its call rate (number of seconds between calls), and other required parameters.

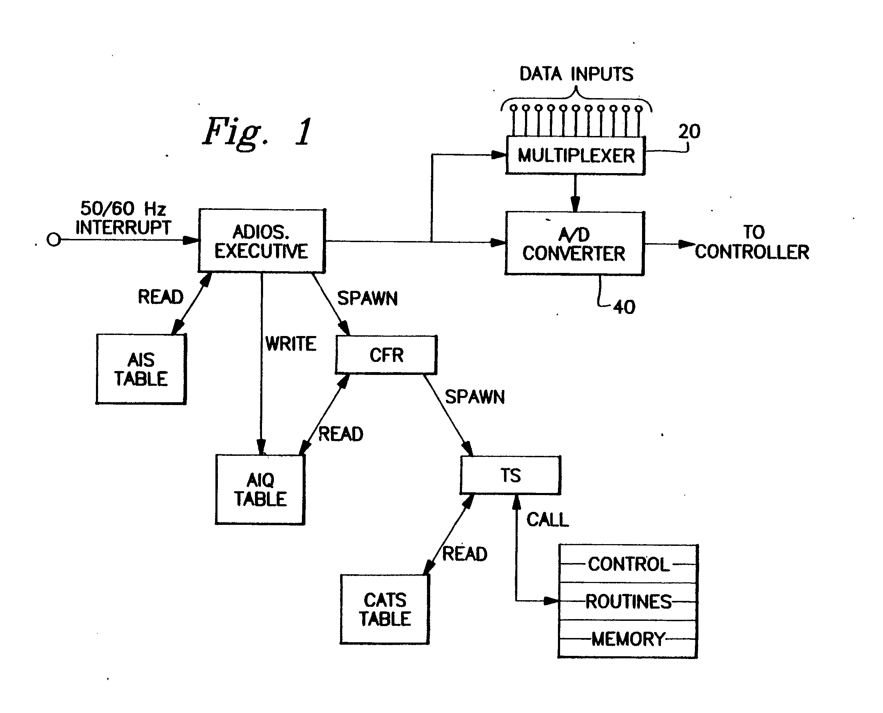

The overall ADIOS program is composed of the following main sub-routines or functions, tables, and a Queue (refer to Fig. 1 for a block diagram representation):

a) ADIOS Executive (ADIOS)

b) Task Scheduler (TS)

c) Calculation/Filter Routine (CFR)

d) Analog Input Channel Schedule (AIS) Table

e) Analog Input Calculation Queue (AIQ) Table

f) Control Algorithm Task Schedule (CATS) Table

The ADIOS operation is based on the 50/60 Hz interrupt signal for all its timing. Every 50/60 Hz interrupt (20.0 or 16.67 msec, respectively) the ADIOS Executive is responsible for servicing a variety of functions, bassed on the state of the AIS Table. The basic functions that the ADIOS Executive routine has to perform, as shown in Fig. 1, are:

a) Reading the AIS Table to determine which input channel should be read.

b) Controlling the multiplexer 20 for scanning the data inputs and the A/D Converter 40 to obtain input readings for use by the controller.

c) Writing the AIQ.

d) Spawning the Calculation/Filter Routines.

The Calculation Filter Routine (CFR) is normally responsible for reading the AIQ and converting all input channel counts in the Queue into engineering units (the exception to this is the calibration channels and the "Marks"). The CFR reads the "Range" from the AIQ in order to use the appropriate calibration channels. This process converts the counts into a physical value. The CFR reads the channel number from the AIQ in order to determine which input configuration file to use to make the conversion. The configuration file describes the relationship between the physical input parameter (ohms, volts, mA) and the engineering units ($^\circ$F, $^\circ$C, psi, etc.). Also in this file is the control variable number which has been mapped to this physical input. The resulting engineering units will be stored in a random access memory (RAM) table corresponding to this Control Variable Number, such that the control algorithm routines that use these values need to have no knowledge of the conversion process.

The Channel Type describes some special functions. If the Type indicates a calibration channel, no conversion is required to engineering units. The number of counts is stored as a reference point which is mapped to a known physical value. If the Type is a "Mark", this indicates that the Task Scheduler should be spawned. The CFR performs filtering using a method described hereinafter. Every channel is read twice by the ADIOS, such that two readings for the same channel always appear in succession in the AIQ. The CFR converts both readings and implements the filtering scheme.

The Task Scheduler (TS) is spawned every second by the CFR due to reading a "Mark" in the AIQ. Information (flag) is available to the TS as to whether or not the spawn is due to a one second Mark or a FAST Rate Mark (the Mark that occurs immediately following the completion of the FAST channels). The TS

4

is responsible for calling the appropriate control algorithm routines based on the CATS Table. The CATS Table describes the Call rate (seconds between calls) and condition codes for each routine. The Condition Code byte for each routine tells whether or not a routine should be called when its Call Rate count expires.

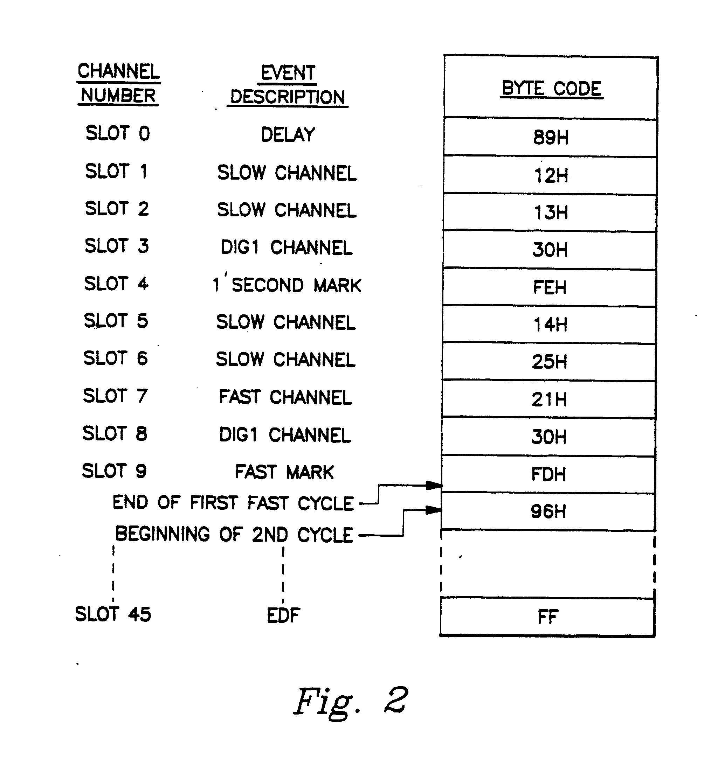

The AIS Table, as shown in Fig. 2, describes a schedule of events within the SLOW Rate cycle. For example, if the SLOW Rate is specified to be fifteen seconds, the AIS Table will be built to describe every event within a fifteen second period. Each table entry is described in terms of a Channel Number and an Event Type. Events are usually channel readings that are one of the normal analog inputs into the controller system or one of the possible calibration readings. The examples herein are based on scanning sixteen data inputs. However, Events can also be special types that provide synchronization (one second Mark, FAST Rate Mark, or Delay Count) or the "End of File" (EOF) type. The "one second Mark" is a Mark that replaces a "one second Mark" every "FAST Rate" seconds. This is a signal to the Task Scheduler that any routines synchronized with the FAST channels should be run. The End of File (EOF) event type indicates that the SLOW Rate cycle is completed and that the "AIS Event Pointer" should be reset to the slot in the table corresponding to the first channel slot in the table.

For initialization on power-up (or hard reset) the AIS Table is not used. The system first cycles through all the calibration channels, then goes through all the configured input channels. Once this is completed the Control is spawned and the first channel in the AIS Table is scheduled. Calibration readings are scheduled into the table also during normal operation.

The AIS table describes a channel event with respect to time. Each event in the table requires a given number of 50/60 Hz interrupts based on the Type. Since the "Event Type" implies how many 50/60 Hz interrupts will occur before the AIS Table is referred again, the ADIOS is required to keep track of this status. The number of interrupts which must occur for each type, and the action the ADIOS must take at each of these interrupts is hardware dependant and is not inherent to the ADIOS operation.

Each slot in the AIS Table is a single byte. For Types that describe actual input readings, the upper nibble of the byte corresponds to the Type, and the lower nibble corresponds to the Channel Number. The other Types use the byte for a purpose specific to that type.

The following table describes the characteristics of each type for the controller system:

| Type | Byte Code | Interrupts Required | |
|---|---|---|---|
| | | 60 Hz | 50 Hz |
| Calibration | 00-0E | 13 | 13 |
| Resistive | 10-1F | 27 | 25 |
| Voltage | 20-2F | 13 | 13 |
| Digital | 30-3F | 2 | 2 |
| Delay | 80-BF | * | * |
| FAST Rate Mark | FD | 0 | 0 |
| One second Mark | FE | 0 | 0 |
| End of File (EOF) | FF | 0 | 0 |

* Depends of the Schedule built within each FAST Cycle.

After reading the AIS Table, the ADIOS would immediately select the appropriate input and set the flags/bytes necessary to monitor the state of the input. Some examples of these flags/bytes are:
. Active (Current) AIS Table slot number
. Number of counts (interrupts) required for this event type.
. Number of counts (interrupts) remaining in this event type.
. "Settling Analog Input" flag.
. "Converting Analog Input" flag.
. "Converting Digital Input" flag, etc.

When each data reading is completed, the ADIOS inserts the counts, channel number, etc. into the AIQ (see hereinafter). There will be two successive readings for each analog channel in this table. The CFR must convert both readings and use these values in the filtering scheme described hereinafter.

When a Mark is read in the AIS Table, it is placed into the AIQ and the next slot in the AIS Table is read immediately. This is done so that when the CFR reads the AIQ, all necessary readings have already been converted, filtered and placed into their appropriate random access memory (RAM) locations by the time the Control Routines are called which use them. The reading of the Mark from the AIS and the writing of the Mark into the AIQ results in a delay of only tens of microseconds. This delay comes at the expense of a 16-20 msec settling time which is part of the reading of any particular channel.

In a Calibration Channel the Byte Code equals 00-OEH. In the AIS table that is downloaded from the PC into PROM, the Byte Code for a Calibration Channel will be fixed at 00H, since the table only inserts a single slot for calibration. The ADIOS keeps track of which Calibration channel is to be selected each time it goes through the table.

Like any input reading, a Calibration Channel consists of two readings. If the readings are both outside the valid range allowed for the channel, the last good reading is left unchanged and a flag is set for this channel. If the Calibration channel continues to produce bad readings (3 consecutive readings), the A/D is shut down.

A Calibration channel requires thirteen interrupt cycles:

| Activity | | Interrupts |
|---|---|---|
| Settle | | 1 |
| First Reading | | 6 |
| Second Reading | | 6 |
| | Total | $\overline{13}$ |

In a Resistive Channel the Byte Code equals 10-1FH. Byte Code Numbers in the AIS Table range from 10-1FH, e.g., channels on the controller numbered from 10-17H. A resistive channel is actually converted twice during each "Reading", since the first conversion may actually be done in the wrong range of the A/D Converter. If the readings are both outside the valid range allowed for the channel, the last good reading is left unchanged, and a flag is set for this channel. If the channel continues to produce bad readings, a Failure message corresponding to this condition may be displayed. The system is not shut down due to an "Out of Range" input.

A Resistive channel requires the following number of interrupts:

| Activity | 60 Hz Interrupts | 50 Hz Interrupts |
|----------|------------------|------------------|
| Settle | 1 | 1 |
| First Reading | 13 * | 12 * |
| Second Reading | <u>13</u> ++ | <u>12</u> ++ |
| Total | 27 | 25 |

* For 60 Hz, seven interrupts (116.67 msec) are required during the first conversion of the first Reading, then an additional six interrupts (for a total of thirteen), since the first conversion may be in the wrong range. Thirteen interrupts are also used during the second Reading to verify the first Reading, since a transient condition may have caused the first conversion of the first Reading to go "Out of Range", when in fact the first range tried was correct (meaning that the second conversion would also be out of range. (For 50 Hz, six interrupts is adequate (120.0 msec) to detect a bad range).

++ A worst case A/D "underrange" conversion period is in the neighborhood of 110 msec. Therefore, the first conversion period must be 116.67 msec (7 X 16.67 msec) for a 60 Hz system, and 120.0 msec (6 X 20.0 msec) for a 50 Hz system.

In a Voltage Channel the Byte Code equals 20-2FH. Byte Code Numbers in the AIS Table range from 20-2FH, e.g., channels on the controller numbered from 20-27H. Since there is only a single range in which voltage channels are read, two conversions within each reading is not necessary. However, the same filtering technique (described hereinafter) is used as with the other types of inputs.

A Voltage channel requires the following number of interrupts:

| Activity | | Interrupts |
|---|---|---|
| Settle | | 1 |
| First Reading | | 6 |
| Second Reading | | 6 |
| | Total | $\overline{13}$ |

In a Digital Channel the Byte Code equals 30-3FH. Byte Code Numbers in the AIS Table range from 30-3FH, e.g., channels on the controller numbered from 30-37H. An analog channel configured as a digital input requires no filtering and is always read at the FAST channel rate. Since the input state is integrated, the proper state will be read unless the input is in a state of transition while being read. The proper state will be read "FAST" seconds later, or only one second if this input is configured as a "DIGI" channel (see hereinafter for explanation of DIGI).

A Digital channel requires the following number of interrupts:

| Activity | | Interrupts |
|---|---|---|
| Settle | | 1 · |
| Reading | | 1 |
| | Total | $\overline{2}$ |

A Digital reading consists of only one interrupt, since the state of the Input Capture bit can be monitored within a short time period to determine if the integration is proceeding in a normal direction (underrange = short).

In a Delay the Byte Code equals 80-BFH. The Delay is a "planned deadtime", required since the schedule of all the channels within each FAST time period cycle will usually not fall on even FAST boundaries. The Delay period is a multiple of 50/60 Hz interrupts and is specified in the lowest six bits of the Byte Code byte (0-63 interrupts).

In a one second Mark the Byte Code equals FE. This mark is used to spawn the Task Scheduler. It may not be at exactly the one second point in each FAST cycle due to the scheduling of the channels, but it will always be within "X" msec. "X" is a parameter specified as part of the basic characteristics of the control algorithm from 0-255 msec.

In a FAST Rate Mark the Byte Code equals FD. This mark is also used to spawn the Task Scheduler. However, it is always much more precise since it is the last code in the FAST cycle. FAST and DIGI channels always immediately preceed this Mark.

In an End of File (EOF) the Byte Code equals FF. This indicates that the Event Pointer should be reset to the first slot in the AIS Table.

The AIS Table is constructed in the PC based on the rates programmed for FAST and SLOW and the tolerance allowed for the One Second Mark. The FAST rate determines the size of each "sub-cycle", whereas the SLOW rate determines the number of sub-cycles necessary to complete the table. The One Second Mark Tolerance determines how many slots will actually be required for Delay in each FAST sub-cycle.

A sub-cycle is first built by working backwards from the FAST Mark. Any DIGI and FAST channels are inserted immediately in front of the FAST Mark. If it happens that the One Second Mark falls within these channels in the sub-cycle, the One Second Mark is inserted where it produces the least deviation from one second within the specified tolerance. If the tolerance cannot be satisfied, a Delay slot will be inserted. The DIGI channels are then also inserted immediately in front of each One Second Mark. After all the FAST channels have been inserted, the SLOW channels are inserted.

The only criteria for SLOW channels is that they all are scheduled at least once within the SLOW rate cycle. The amount of time available in a sub-cycle (after all the FAST and DIGI channels have been inserted), the number of sub-cycles in the table, and the number of Delay slots necessary due to the tolerance specified for One Second Marks determine whether or not the schedule, first of all, is even possible. If possible, the number of sub-cycles, and the number of slots necessary in each sub-cycle, determine if the table will eventually even fit within the controller's PROM . If both of these initial criteria are met. the SLOW channels can be inserted.

In each sub-cycle, SLOW channels are inserted prior to all the FAST channels and in between all the One Second Marks and the DIGI channels. If FAST = two seconds and SLOW = ten seconds, there are five sub-cycles in the table. If, for example, there is space in each sub-cycle for two SLOW resistive channels, and there are ten SLOW channels to schedule, the schedule would be invalid. This is because at least one slot in the table must be reserved for a calibration channel. If there were only six SLOW channels to schedule, for example, all six would be scheduled in the first three sub-cycles. The last four spaces available in the last two sub-cycles would then be used for calibration and greater Delay would be necessary to fill the unused time.

Delay is calculated such that the total number of interrupts in each sub-cycle adds up to the FAST number of seconds. If FAST = three seconds, the total number of interrupts in a 60 Hz system would be 3 X 60 = 180. If all channels were scheduled and the total number of interrupts used was 100, the Delay count necessary would be 180 - 100 = 80. Since the maximum Delay count in any single byte code is 63, this delay would have to be split between two adjacent slots. It would probably be split into a Delay count of 60 (BCH) and a separate slot of 20 (94H), to accommodate the One Second Mark.

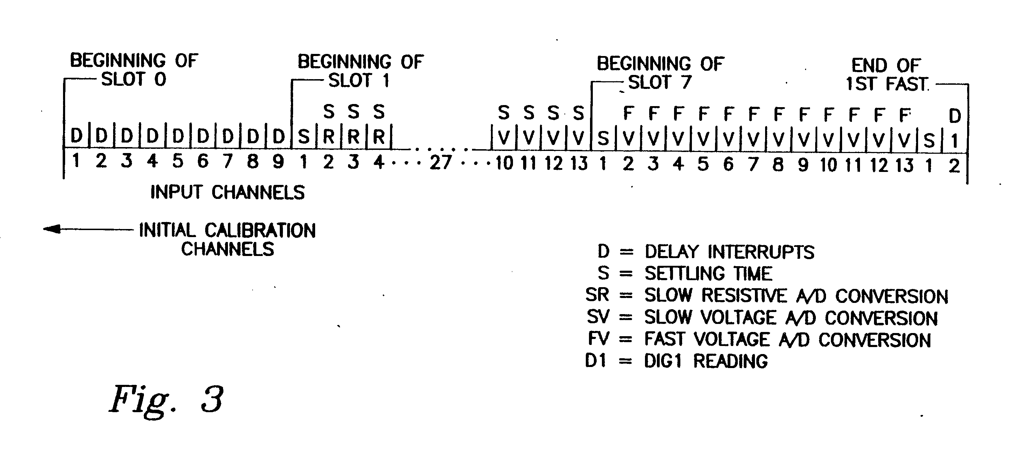

The AIS Table in Fig. 2 contains sample entries which will be used to illustrate an example schedule, e.g., sixteen data inputs. Fig. 3 illustrates how this schedule is translated into real-time by the ADIOS. In this example the FAST Rate = two seconds and the SLOW Rate = ten seconds. The configuration in this example is the following: one FAST Voltage-type (channel #1), one DIGI-type (channel #0), one SLOW Voltage-type (channel #5), and thirteen SLOW Resistive-type (channels #2-4, and 6-15) inputs.

Start-up:

The first fourteen conversions are the Calibration Channels. The next "x" conversions depend on the number of channels configured, which in this case is all sixteen channels. The conversions proceed from the lowest physical channel number to the highest. This is the only time this will be done, since the calibration channels will be "sprinkled" into the table during normal operation, and the regular input channels will be based on the AIS Table. These time slots are to the left in Fig. 3 (earlier in time).

"Delay" (Slot 0):

The Delay slot contains the Byte Code 89H (nine delay counts). The calculation to determine this Delay value, based on the various Event Types and the counts they require in this particular sub-cycle, is shown below.

| Counting from the FAST mark (Slot 9): | | | |
|---|---|---|---|
| Slot # | TYPE | | Counts Used |
| 8 | DIG1 | | 2 |
| 7 | FAST V | | 13 |
| 6 | SLOW V | | 13 |
| 5 | SLOW R | | 27 |
| 3 | DIG1 | | 2 |
| 2 | SLOW R | | 27 |
| 1 | SLOW R | | 27 |
| | | Total | 111 |

The Delay count needs to be (FAST X 60) - Total = 120 -111 = 9. Therefore, on the ninth interrupt Slot #1 is read. Fig. 3 shows the nine Delay interrupts at the far left of the diagram.

"SLOW Channel" (Slot 1):

9

This slot indicates a Byte Code of 12H (resistive Channel #2). Channels 2-15 are the channels configured as SLOW. The scheduler inserts these channels into the five sub-cycles as space permits. In this first sub-cycle, SLOW channels 2-5 are scheduled (Slots 1, 2, 5 and 6). Channels 6-9 will be scheduled in sub-cycle #2, channels 10-13 in sub-cycle #3, and the last 2 SLOW channels in sub-cycle #4.

Channel #2 is selected and the A/D routines are called to control the reading of this input. Fig. 3 shows this channel immediately following the Delay interrupts. The channel is first "settled" (S), then the A/D conversion is done in the next 26 interrupts. On the 27th interrupt Slot #2 is read. (Slots 2-6 are not shown in Fig. 3.)

"DIGI Channel" (Slot 3):

Since the DIGI channel type requires a reading every second, the DIGI channel is scheduled immediately before the One Second Mark in Slot #4. The channel to be read is #0 (Byte Code 30H indicates DIGI Channel #0).

"One Second Mark" (Slot 4):

The One Second Mark is scheduled here based on the channels located in Slots 5-8 and is placed based on the closest it can get to the 60th count back from the FAST Mark. In this example:

| Slot # | TYPE | | Counts Used |
|--------|--------|-------|------|
| 22 | DIG1 | | 2 |
| 21 | FAST | | 13 |
| 20 | SLOW V | | 13 |
| 19 | SLOW R | | 27 |
| | | Total | 55 |

The One Second Mark is located 55 counts back from the FAST Mark, or: (60 - 55) = 5 counts off (83 msec in a 60 Hz system). This schedule would be acceptable if the tolerance specified was something in excess of 83 msec. The Mark does not appear in Fig. 3, since it does not take any real time in the schedule.

"FAST Mark" (Slot 9):

The FAST Mark indicates the end of sub-cycle #1. Note that the FAST Mark does not actually take up any real time in Fig. 3. The next Slot will contain the Delay counts for sub-cycle #2.

Remainder of Table (Slots 10-45):

The remainder of the table would consist of sub-cycles #2-#5. The Delay counts and scheduling of channels in sub-cycles #2 thru #5 will be different from #1, since the single SLOW voltage-type channel was read in sub-cycle #1. For example, the Delay count in Slot #10 must be increased to 22 (96H), since the original Delay count was 9 (89H), and the SLOW Voltage channel is removed which adds 13 counts (9 + 13 = 22).

The remaining 10 SLOW resistive channels must be spread between sub-cycles #2-#5, and only three will fit in each sub-cycle. The reason is because there was only 9 counts left for Delay in the first sub-cycle, the SLOW voltage channel freed-up 13 counts, and the remaining resistive channels require 27 counts each, i.e., 22 available < 27 required.

Sub-cycle #5 will consist of the last SLOW channel, the FAST and DIGI channels and one of the 14 Calibration Channels. The Channel Number will be read as 00H and the ADIOS must keep track of which Calibration channel is next, since the AIS Table does not explicitly call out the channel number in this section of the table.

"EOF" (Slot 45)

This slot indicates the end of the table and that the beginning of the table should be read (Slot 0). This schedule required 46 slots in this example, or 92 bytes. This number was arrived at as follows:

| Sub-cycle # | | # of Slots |
|---|---|---|
| 1 | | 10 |
| 2 | | 9 |
| 3 | | 9 |
| 4 | | 9 |
| 5 | | 8 |
| EOF | | 1 |
| | Total | 46 |

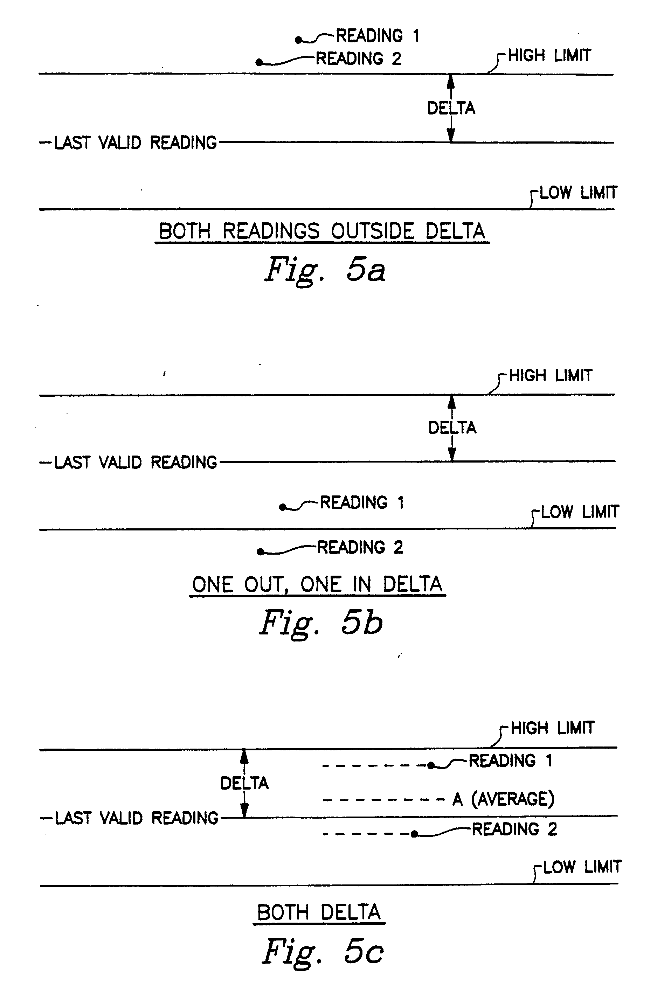

The analog input calculation queue (AIQ) is a queue of channels that have been read, but have not yet had their counts coverted to a meaningful engineering unit for use by the control algorithm routines. The table is composed of the following parameters:
. Channel Number (1 byte)
. Accumulated Counts (2 bytes)
. A/D Range in which counts were accumulated (1 byte)
An entry into the AIQ is made every time a channel is read and a valid number of counts is accumulated. When an entry is made into the AIQ, the ADIOS spawns the CFR. The CFR may already be running at this point, but the operating system will not restart the CFR until it is completed. The CFR reads the AIQ and converts the counts to engineering units based on the configuration parameters for that channel number. For every analog voltage/resistive input channel there are two readings taken. Both readings are converted and used in the filtering scheme described hereinafter.
When the CFR reads a Mark in the AIQ, it spawns the Task Scheduler. The Control Algorithm Task Schedule (CATS) Table describes which control-related routines are to be called by the Task Scheduler, whether or not the task is to be synchronized to a FAST channel reading, and the frequency at which it should be called. The Task Scheduler is capable of calling routines at 1-255 second intervals. Tasks that depend on the timely reading of an input, i.e., need to be synchronized to FAST channel reading, are insured to run after the channel has been read and its engineering units computed. This is accomplished by inserting one second and FAST Rate "Marks" into the Channel Schedule and moving these Marks into the AIQ. When a Mark is read in the AIQ the Task Scheduler is spawned.
The CATS Table has the following structure:
. Subroutine ID Number (Address)
. Sync Flag
. Initial Call Rate Count
. Normal Call Rate Count
. Condition Code Byte
where:
Subroutine ID Number (Address): Number assigned to the subroutine which allows a subroutine's status to be kept and a call to be made via a table entry.
Sync Flag: Allows a routine to be called such that it is always synchronized to a FAST channel reading it depends on.
Initial Call Rate Count: Number of seconds before the routine is called for the very first time. This number can be changed on the fly if required.
Normal Call Rate Count: Number of seconds between calls on a normal basis. This number can be changed on the fly if required.
Condition Code Byte: Byte that describes which conditions must exist (or not exist) before routine can be run, even if Call Rate count has expired.
The analog-to-digital converter (A/D) read and filtering scheme used for either a voltage or resistive input, whether it's designated as FAST or SLOW, is the same. Each Control Variable in the control algorithm is assigned a "Delta" value which represents the number of units the input variable is allowed to change between successive readings of the channel. This "Delta" value is specified in the same units as are used for converting the counts to an engineering unit value. The two readings of the input are converted and compared against this Delta to determine the new "Valid Reading" in the following manner (see Figs. 5A, 5B and 5C.:

1. If both readings are outside the delta, take the closest reading and store it as the new "Valid Reading". In Fig. 5A, Reading 2 would become the new "Last Valid Reading".

2. If one is outside the delta and the other is in, use the one that's in as the new "Valid Reading". In Fig. 5B, Reading 1 would become the new "Last Valid Reading".

3. If both are within the delta, the average of the two readings will become the new "Valid Reading" (Fig. 5C shows this average).

Accordingly, it may be seen that there has been provided, in accordance with the present invention, an improved adaptive input data sampling scheduling system.

## Claims

1. An analog to digital operating system characterised by a multiplexer means (20) for connecting selected ones of a plurality of inputs to an output,
an analog to digital converter means (40) connected to said output for converting analog signals to corresponding digital representations and
input sampling means for controlling said multiplexing to provide a scanning of the multiplexer inputs according to a selectively programmed schedule.

2. A system according to Claim 1 characterised in that said scheduling means includes a memory means for storing an adaptive input scanning schedule.

3. A system according to Claim 2 characterised in that said schedule includes a plurality of programmable inuput data rate cycles.

4. A system according to Claim 3 characterised in that the rate cycles include Fast, Slow and Dig.1 with Fast rates being analog inputs at multiples of one second, Slow rates being analog inputs at multiples of Fast rates and Dig.1 rates being digital inputs at a one second rate.

5. A system according to any of Claims 2 to 4 characterised in that said memory means stores an executive program for reading an analog input channel schedule table which describes a schedule of every event within a Slow rate cycle wherein the events are either input channel readings or types that provide synchronization with a system routine.

6. A system according to Claim 5 characterised in that each event in the schedule table requires a predetermined number of interrupts from a clock.

7. A system according to Claim 5 or 6 characterised in that each analog input is read twice and the results of each reading are converted to a digital count and stored in an analog input calculation queue table to be converted to engineering units for subsequent use by a process controller.

Fig. 1

DATA INPUTS

MULTIPLEXER  20

A/D CONVERTER  40

TO CONTROLLER

50/60 Hz INTERRUPT

ADIOS. EXECUTIVE

READ

AIS TABLE

WRITE

SPAWN

CFR

READ

AIQ TABLE

SPAWN

TS

CALL

READ

CATS TABLE

CONTROL ROUTINES MEMORY

EP 0 405 924 A2

| CHANNEL NUMBER | EVENT DESCRIPTION | BYTE CODE |
|---|---|---|
| SLOT 0 | DELAY | 89H |
| SLOT 1 | SLOW CHANNEL | 12H |
| SLOT 2 | SLOW CHANNEL | 13H |
| SLOT 3 | DIG1 CHANNEL | 30H |
| SLOT 4 | 1 SECOND MARK | FEH |
| SLOT 5 | SLOW CHANNEL | 14H |
| SLOT 6 | SLOW CHANNEL | 25H |
| SLOT 7 | FAST CHANNEL | 21H |
| SLOT 8 | DIG1 CHANNEL | 30H |
| SLOT 9 | FAST MARK | FDH |
| END OF FIRST FAST CYCLE | | 96H |
| BEGINNING OF 2ND CYCLE | | |
| SLOT 45 | EDF | FF |

*Fig. 2*

EP 0 405 924 A2

BEGINNING OF SLOT 0  BEGINNING OF SLOT 1  BEGINNING OF SLOT 7  END OF 1ST FAST.

| D | D | D | D | D | D | D | D | D | S | S R | S R | S R | | S V | S V | S V | S V | S | F V | F V | F V | F V | F V | F V | F V | F V | F V | F V | F V | F V | S | D 1 |

1 2 3 4 5 6 7 8 9 1 2 3 4 · · · 27 · · · 10 11 12 13 1 2 3 4 5 6 7 8 9 10 11 12 13 1 2

INPUT CHANNELS

◄─── INITIAL CALIBRATION CHANNELS

D = DELAY INTERRUPTS
S = SETTLING TIME
SR = SLOW RESISTIVE A/D CONVERSION
SV = SLOW VOLTAGE A/D CONVERSION
FV = FAST VOLTAGE A/D CONVERSION
D1 = DIG1 READING

*Fig. 3*

INPUT CHANNEL NUMBER

SECONDS

*Fig. 4*

CONTROL SPAWNED — 1 SEC. MARK
CONTROL RUNS (C)

CONTROL SPAWNED — FAST MARK
CONTROL RUNS (C)

1 SEC. MARK
(C)

FAST MARK
(C)

1 SEC. MARK
(C)

FAST MARK
(C)

1 SEC. MARK
(C)

FAST MARK
(C)

1 SEC. MARK
(C)

FAST MARK
(C)

D
② SR
③ SR
⓪ D1
④ SR
⑤ SV
① FV
⓪ D1
D
⑥ SR
⓪ D1
⑦ SR
⑧ SR
① FV
⓪ D1
D
⑨ SR
⓪ D1
⑩ SR
⑪ SR
① FV
⓪ D1
D
⑫ SR
⓪ D1
⑬ SR
⑭ SR
① FV
⓪ D1
D
⑮ SR
⓪ D1
D
Ⓧ CALIB.
① FV
⓪ D1

1

2

3

4

5

6

7

8

9

10

FAST SUB-CYCLE #1

FAST SUB-CYCLE #2

FAST SUB-CYCLE #3

FAST SUB-CYCLE #4

FAST SUB-CYCLE #5

•⟋READING 1
•⟋READING 2
⌐HIGH LIMIT

DELTA

—LAST VALID READING

⌐LOW LIMIT

BOTH READINGS OUTSIDE DELTA

*Fig. 5a*

⌐HIGH LIMIT

DELTA

—LAST VALID READING

•⟋READING 1
⌐LOW LIMIT

•⟋READING 2

ONE OUT, ONE IN DELTA

*Fig. 5b*

⌐HIGH LIMIT

DELTA

•⟋READING 1

—LAST VALID READING

A (AVERAGE)

•⟋READING 2

⌐LOW LIMIT

BOTH DELTA

*Fig. 5c*

## ADIOS EXECUTIVE

```
                    ┌─────────────────┐
                    │   ADIOS TABLE   │
                    └────────┬────────┘
                             │ READ TABLE
                             ▼
                    ┌─────────────────┐
                    │    A/D TASK     │──── STORE ────┐
                    └────────┬────────┘               ▼
                             │              ┌──────────────────┐
                      SPAWN  │   ┌───────── │   INPUT QUEUE    │
                             │   │ READ     │   INPUT DATA     │
                             ▼   ▼ QUEUE    │   TASK MARKER    │
                    ┌─────────────────┐     └──────────────────┘
                    │ A/D POST-PROCESS│
                    │      TASK       │
                    └────────┬────────┘
                             │ SPAWN
  ┌──────────────┐           │              ┌──────────────────┐
  │  TASK TABLE  │── READ ──┐│┌── 1 SEC. ──│   ONE SECOND     │
  └──────┬───────┘   TABLE  │││   SYNC.     │     TIMER        │
         │                  ▼▼▼             └──────────────────┘
         │            ┌─────────────────┐
         │            │    CONTROL      │
         │            │   SCHEDULER     │
         │ SET        └────────┬────────┘
         │ CONDITION           │ SPAWN TASK
         │ CODE                ▼
         │            ┌─────────────────┐
         └──────────  │  CONTROL TASKS  │
                      └─────────────────┘
```

## *Fig. 6a*

## CONTROL SCHEDULER

*Fig. 6b*

Fig. 6c

A/D POST-PROCESS

*Fig. 6d*

## A/D TASK

INITIALIZE READ POINTER TO ADIOS TABLE

READ NEXT ADIOS TABLE AND INCREMENT READ POINTER

SPAWN TASK

YES → STORE SPAWN TASK CODE IN QUEUE

NO

A/D CONV. FOR AN INPUT

NO → DELAY LOOP

YES

DO A/D CONVERSION

A/D FINISHED

NO

YES

STORE A/D RESULT IN QUEUE

SPAWN A/D POST PROCESSOR

## Fig. 6e